# EUROPEAN PATENT SPECIFICATION

(11) **EP 1 241 406 B1**
(45) Date of publication and mention of the grant of the patent: **02.02.2005**
(21) Application number: 02445032.2
(22) Date of filing: 12.03.2002
(51) Int. Cl.: F23G 1/00, F23G 5/033, F23G 5/04, F23G 5/30

(54) **Method for burning animal material**
Verfahren zur Verbrennung von tierischem Material
Procédé d'incinération de restes d'animaux

(30) Priority: 13.03.2001 SE 0100870
(43) Date of publication of application: 18.09.2002
(73) Proprietor: Professor A. Kullendorff AB, 413 14 Göteborg (SE)
(72) Inventor: Kullendorff, Anders, 413 14 Göteborg (SE); Backman, Stig, 427 35 Billdal (SE); Bengtsson, Thomas, 441 57 Alingsäs (SE); Herstad Svörd, Solvie, 423 33 Torslanda (SE); Virta, Leo, 531 17 Lidköping (SE)
(74) Representative: Westman, Per Börje Ingemar

(56) References cited:
- DE-A- 19 708 459
- US-A- 6 021 743
- US-A- 6 055 917
- US-B1- 6 189 463
- PATENT ABSTRACTS OF JAPAN vol. 006, no. 076 (M-128), 13 May 1982 (1982-05-13) & JP 57 016713 A (MITSUBISHI RAYON ENG KK;OTHERS: 01), 28 January 1982 (1982-01-28)

## Description

The present invention refers to a method for burning animal material and particularly such material, which may mean risk for spreading of BSE (Bovine spongiform encefalopati).

Due to a decision from Authorities regarding handling of material, which may cause risk for spreading of BSE (by infection caused by transmissible spongiform encefalopati, TSE), carcasses of animals that have died from natural causes and certain organs and tissues from slaugthered animals shall be destroyed by burning.

Hitherto such material has been worked up to meat powder and fat by being crushed, sterilized and dried. As recent as in September last year the meat powder was used, e.g. as mink fodder. Nowadays it is however stored for later incineration. rhe fat has already earlier been used as fuel. The costs required for the pre-treatment are comparatively high, but if the material could instead be destructed by burning directly upon the crushing, i.e. without drying and subsequent sterilization, the costs for the pre-treatment could be reduced substantially and down to about a fifth of the costs for the prevailing pre-treatment. In such a case the fat should not be detached but form a part of the crushed animal material. For handling reasons such material should be crushed in direct connection to the burning.

At analyses of such crushed animal material it has been established that the heat value corresponds to a normal bio-fuel having a moisture content of about 50%. This means that it is possible to burn the material without need of supporting firing.

The heat value incorporated in 50.000 tons of animal material, which is deemed to correspond to the volume which hereinafter needs to be destructed in Sweden per year, should correspond to about 120 GWh or an energy production of 15 MW.

From GB 2313901 A1, which is considered to be the closest prior art, is known a mobile rotary oven intended to perform a process for destruction of animal fuel, preferably from BSE infected animal carcasses. During the process the carcasses except for the hides, i.e. meat and bone are comminuted into small pieces for facilitating the feeding of the material into the oven. However, such a feeding of combustible material, will not be so uniform and homogenous as is required for a continuous firing. A similar process is known from DE-A-19 708 459.

The purpose of the present invention is to propose a method for burning animal material, which gives an incineration, fulfilling the requirements according to the current regulations, regarding utilization and treatment of hazardous waste, which makes it possible to use material, that must not be subjected to a pre-treatment corresponding to that hitherto used and which is therefore comparatively inexpensive, and gives a good energy exchange with simultaneous heat recovery from the burning, and this has been achieved by means of the method defined in the accompanying claims.

Hereinafter the invention will be further described with reference to embodiments of implements for performing the method illustrated in the accompanying drawings.
Fig. 1 shows schematically an example of a simple combustion boiler, which can be used for performing the method according to the invention.
Fig. 2 is an explanatory sketch showing a flow diagram for preparation of animal fuel.
Fig. 3 illustrates a furnace with a circulating fluidised bed, which can form part of the boiler according to Fig. 1, and
Fig. 4 shows schematically a corresponding furnace having a mechanical grate.
Fig. 5 shows schematically a bubble fluidised boiler.

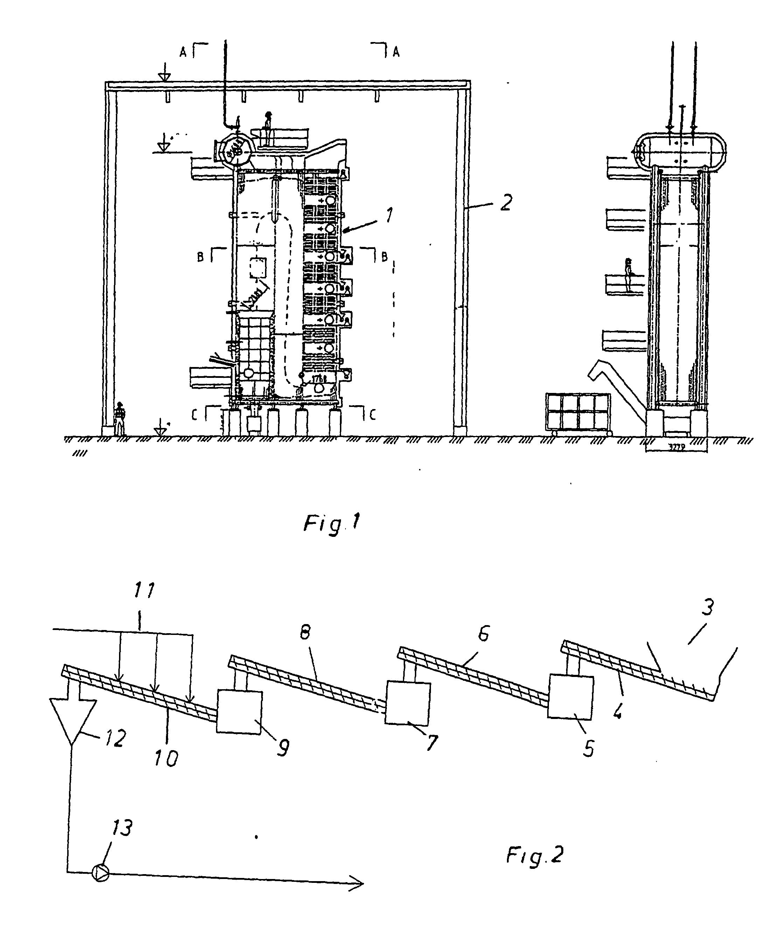

Fig. 1 shows schematically a combustion boiler 1 located in a closed room 2, which could preferably be used for performing the method according to the invention. As the boiler is not critical for performing the method, it will only be described in a summarized manner and as one of several possible alternatives.

Fig. 2 shows schematically a plant for preparation of animal fuel prior to the introduction in the combustion boiler, whereby the plant incorporates a receiving hopper 3 for animal fuel in the form of complete or divided carcasses, which on a conveyor 4 are transported to a coarse crusher 5. From there the coarsely crushed material is transported by means of a second conveyor 6 to a fine crusher 7, before it via a further conveyor 8 is supplied to a mill 9 where the final comminution is effected. One of the crushing steps might perhaps be excluded. The comminuted mass is moved from the mill 9 via a conveyor 10, where steam 11 is supplied to the mass, to an intermediate container 12. The semi-liquid material collected in the intermediate container 12 then is conveyed by means of a pump 13 to nozzles (not shown) for feeding into a boiler, e.g. a boiler of the common type intimated in Fig. 1.

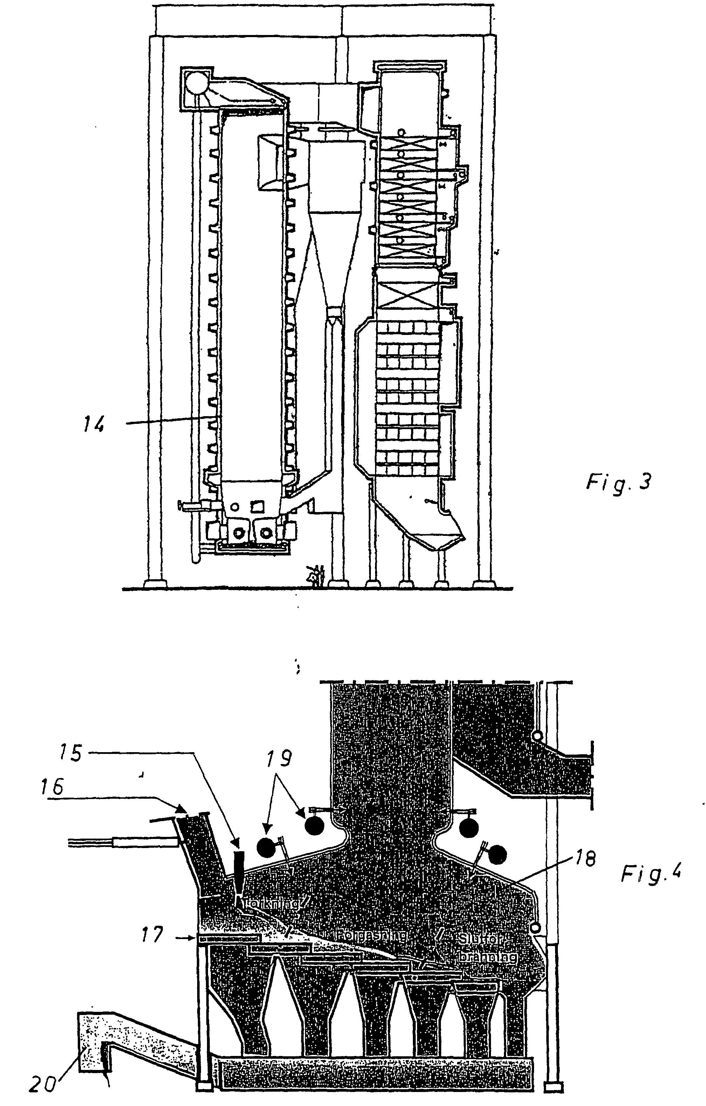

In Fig. 3 is schematically illustrated a boiler having a circulating fluidised bed 14 (CFB), which also is an appropriate alternative for a boiler for performing the burning in question. The circulating fluidised bed has most applications for large boilers, and it also has many system parts, whereby its investment costs are high.

In Fig. 4 is schematically illustrated a boiler, operating according to the roaster principle with reciprocating grate bars. The boiler illustrated can preferably be fired with liquid as well as semi-liquid animal fuel, which is introduced at 15, and with solid bio-fuels, which are introduced at 16. The fuel will fall down onto the mechanical grate bars 17, which due to their reciprocating motion will move the material through the combustion chamber 18 of the boiler, in which combustion air is introduced via a number of nozzles 19. Thereupon the material is subjected to drying, gasification and final burning, and at 20 the ashes are discharged in wet form.

As an alternative the animal fuel can be introduced in the boiler at a higher level in finely divided form, and be allowed to fall down onto the bed whereby it is subjected to a certain degree of drying.

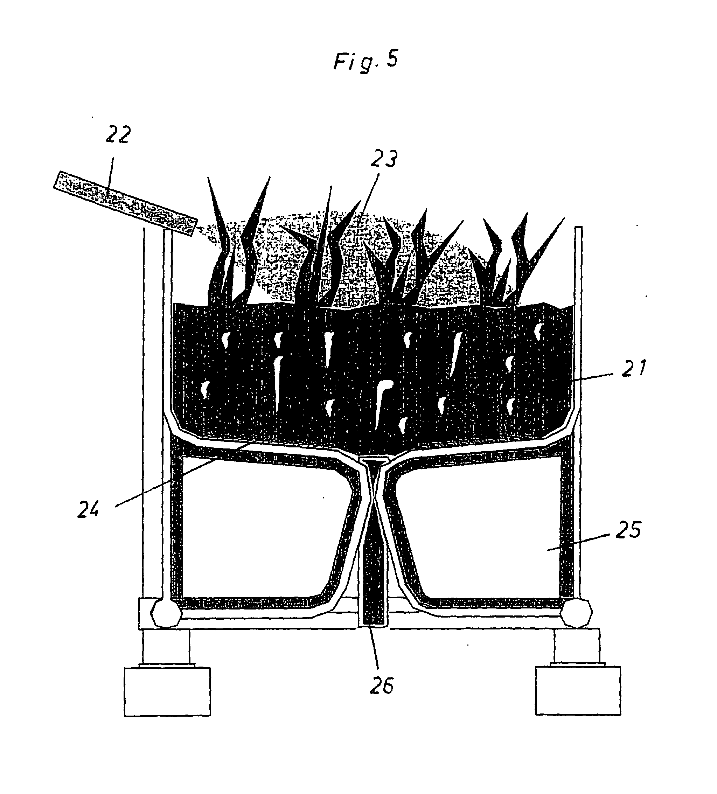

In Fig. 5 finally is illustrated a burner with a fluidised bubble bed, which should be a more appropriate solution than the CFB boiler, as animal fuel with reference to moisture content and elementary analysis is a homogenous material. The furnace has a bubble bed 21 in which the fuel is introduced by means of one or more fuel feeding devices 22. These devices might be feeding-in screws, but it can be more advantageous with pneumatic introduction devices, via so called pitchs and blowing beds. Contrary to roasting furnaces, the fluid bed contains a very small content of fuel, and the task for the introduction device is to meter the correct amount of fuel and to distribute it so well as possible in the berth, and for this purpose it may be appropriate to use fuel lances, which distribute the fuel with splitter air, which is introduced in the lance before the inlet in the furnace.

In the bed the fuel 23 is degasified and is partly combusted and the combustion is controlled via regulation of the supply air, which is at one hand introduced via the nozzle bottom 24 from air cabinets 25 as fluidising air and on the other hand via primary air registers and secondary air registers, thus that a staged combustion is achieved in the furnace. In this manner is maintained a normal temperature of about 850°C. This temperature will give a good calcination at the same time as the reduction of sulphur and NOₓ is efficient. Discharge of ashes is effected at 26.

The invention is not limited to the embodiments shown and described in connection thereto, but modifications and variants are possible within the scope of the accompanying claims.

## Claims

1. Method for burning animal material and particularly such animal material, which may mean risk for spreading of BSE (Bovine spongiform encefalopati), and simultaneous heat extraction from the burning, whereby the animal material prior to the burning is subjected to a pre-treatment by crushing, but without separation of fat,
**characterized therein,**
that the animal material at pre-treatment without drying and sterilization is prepared to a mass having a considerable moisture content,
that the mass is fed into an appropriate combustion boiler and thereby is well distributed in spray form or as strings, which are split into atomized particles by means of a fuel lance prior to introduction into said combustion boiler, and
that the burning of the material is performed at a combustion temperature of at least 850°C during at least 2 seconds.

2. Method as claimed in claim 1,
**characterized therein,**
that the crushed animal material is burned together with fuel of other appropriate type, e.g. bio-fuel.

3. Method as claimed in claim 1 or 2,
**characterized therein,**
that the animal fuel is spread from the fuel lance by means of pressurized air or steam.

4. Method as claimed in anyone of the preceding claims,
**characterized therein,**
that for the burning is used a furnace having a fluidised bed boiler of bubble type, in which the fuel is degasified and burned, and the temperature of the boiler is controlled by adjustment of the combustion air supply to a normal temperature of about 850° C.

5. Method as claimed in anyone of claims 1-3,
**characterized therein,**
that for the burning is used a furnace having a circulating fluidised bed in which the fuel is degasified and burned, and that the temperature of the boiler is controlled by adjustment of the combustion air supply to a normal temperature of about 850° C.

6. Method according to anyone of claims 1 to 3,
**characterized therein,**
that for the burning is used a furnace having a mechanical grate, in which first the moisture-containing animal fuel passes a drying zone, and thereupon is passed into a degasifying zone, wherein the volatile components of the fuel evaporate in gaseuos form and are burned above the grate, and that the fuel content of nonvolatile carbob thereupon is moved by the mechanical grate to a burning zone in which it is finally burnt.

7. Method according to anyone of the preceding claims,
**characterized therein,**
that the burning is effected in a boiler (1) located in a closed room (2), whereby the atmosphere in the closed room (2) is kept under a sub-pressure in relation to the surrounding for the purpose of avoiding odour problems in the environment.

## Patentansprüche

1. Verfahren zur Verbrennung von tierischem Material und insbesondere solchem tierischen Material, das ein Risiko der Verbreitung von BSE (Bovine Spongiforme Enzephalopathie) darstellen kann, und zur gleichzeitigen Wärmeentnahme aus der Verbrennung, wobei das tierische Material vor der Verbrennung einer Vorbehandlung durch Zerkleinerung, aber ohne Fettabscheidung, unterworfen wird,
**dadurch gekennzeichnet,**
**dass** das tierische Material in der Vorbehandlung ohne Trocknung und Sterilisation zu einer Masse, die einen beträchtlichen Feuchtigkeitsgehalt hat, vorbereitet wird,
**dass** die Masse in einen geeigneten Verbrennungskessel eingeleitet und dabei gründlich in versprühter Form oder als Stränge, die mittels einer Brennstofflanze vor der Einleitung in den genannten Verbrennungskessel in zerstäubte Partikel aufgeteilt werden, verteilt wird und
**dass** die Verbrennung des Materials bei einer Verbrennungstemperatur von mindestens 850 °C, die mindestens 2 Sekunden lang herrscht, durchgeführt wird.

2. Verfahren nach Anspruch 1,
**dadurch gekennzeichnet,**
**dass** das zerkleinerte tierische Material zusammen mit Brennstoff von anderer geeigneter Art z. B. Biobrennstoff verbrannt wird.

3. Verfahren nach Anspruch 1 oder 2,
**dadurch gekennzeichnet,**
**dass** der tierische Brennstoff aus einer Brennstofflanze mittels unter Druck stehender Luft oder unter Druck stehendem Dampf verteilt wird.

4. Verfahren nach einem der vorhergehenden Ansprüche,
**dadurch gekennzeichnet,**
**dass** zur Verbrennung ein Ofen benutzt wird, der einen Wirbelschichtkessel von blasenbildender Art hat, in dem der Brennstoff entgast und verheizt wird, und die Kesseltemperatur durch Einstellung der Verbrennungsluftversorgung auf eine Normaltemperatur von ungefähr 850 °C eingestellt wird.

5. Verfahren nach einem der Ansprüche 1 bis 3,
**dadurch gekennzeichnet,**
**dass** zur Verbrennung ein Ofen benutzt wird, der eine zirkulierende Wirbelschicht hat, in der der Brennstoff entgast und verheizt wird, und die Kesseltemperatur durch Einstellung der Verbrennungsluftversorgung auf eine Normaltemperatur von ungefähr 850 °C eingestellt wird.

6. Verfahren nach einem der Ansprüche 1 bis 3,
**dadurch gekennzeichnet,**
**dass** zur Verbrennung ein Ofen benutzt wird, der einen mechanischen Gitterrost hat, in dem zuerst der tierische Brennstoff, der Feuchtigkeit enthält, einen Trocknungsbereich durchläuft und daraufhin in einen Entgasungsbereich eingeleitet wird, worin die flüchtigen Komponenten des Brennstoffes in gasförmiger Form verdampfen und oberhalb des Gitterrostes verbrannt werden, und dass der Brennstoffgehalt an nicht flüchtigem Kohlenstoff daraufhin durch den mechanischen Gitterrost zu einem Verbrennungsbereich bewegt wird, in dem er letztendlich verbrannt wird.

7. Verfahren nach einem der vorhergehenden Ansprüche,
**dadurch gekennzeichnet,**
**dass** die Verbrennung in einem Kessel (1) durchgeführt wird, der sich in einem geschlossenen Raum (2) befindet, wodurch die Atmosphäre in dem geschlossenen Raum (2) unter Unterdruck in Bezug auf die Umgebung gehalten wird, um Geruchsprobleme im Umfeld zu vermeiden.

## Revendications

1. Procédé destiné à l'incinération de restes d'animaux et en particulier, des restes d'animaux susceptibles d'engendrer un risque de propagation de l'ESB (encéphalopathie spongiforme bovine), et permettant simultanément de récupérer la chaleur de l'incinération, procédé dans lequel avant l'incinération, les restes d'animaux sont soumis à un pré - traitement par broyage, mais sans séparation des graisses,
**caractérisé en ce que**,
les restes d'animaux sont préparés dans le pré - traitement sans séchage et stérilisation à une masse ayant une teneur considérable en humidité,
**en ce que** la masse est alimentée dans une chaudière de combustion appropriée et y est ainsi bien répartie sous la forme pulvérisée ou sous forme de ficelles, qui sont refendues en particules atomisées au moyen d'une lance à combustible avant l'introduction dans ladite chaudière de combustion, et
**en ce que** la combustion est effectuée à une température de combustion d'au moins 850°C pendant au moins deux secondes.

2. Procédé selon la revendication 1,
**caractérisé en ce que**,
les restes d'animaux broyés sont brûlés ensemble avec le combustible d'un autre type approprié, par exemple du bio - combustible.

3. Procédé selon la revendication 1 ou 2,
**caractérisé en ce que**,
le combustible animal est répandu par la lance de combustion au moyen d'air sous pression ou de vapeur.

4. Procédé selon l'une quelconque des revendications précédentes,
**caractérisé en ce que**,
pour la combustion, on utilise un four comportant une chaudière à lit fluidisé du type à barbotage, dans lequel le combustible est dégazé et brûlé, et la température de la chaudière est commandée par réglage de l'alimentation de l'air de combustion jusqu'à une température normale d'environ 850°C.

5. Procédé selon l'une des revendications 1 - 3,
**caractérisé en ce que**,
pour la combustion, on utilise un four ayant un lit fluidisé à circulation dans lequel le combustible est dégazé et brûlé, et **en ce que** la température de la chaudière est commandée par réglage de l'alimentation de l'air de combustion jusqu'à environ 850°C.

6. Procédé selon l'une quelconque des revendications 1 à 3,
**caractérisé en ce que**,
pour la combustion, on utilise un four comportant une grille mécanique, dans laquelle dans un premier temps, on fait d'abord passer le combustible animal contenant de l'humidité dans une zone de séchage, et ensuite on le fait passer dans une zone de dégazage, dans laquelle les composants volatils du combustible s'évaporent sous la forme gazeuse et sont brûlés au-dessus de la grille, et **en ce que** la teneur en combustible du carbone volatil est alors déplacée par la grille mécanique vers une zone de combustion dans laquelle elle est finalement brûlée.

7. Procédé selon l'une quelconque des revendications précédentes,
**caractérisé en ce que**,
la combustion s'effectue dans une chaudière (1) située dans une chambre fermée (2), l'atmosphère dans la chambre fermée (2) étant maintenue en sous - pression par rapport à l'environnement dans le but d'éviter des problèmes d'odeurs dans l'atmosphère ambiante.
